# EUROPÄISCHE PATENTSCHRIFT

(11) **EP 1 802 148 B1**
(45) Veröffentlichungstag und Bekanntmachung des Hinweises auf die Patenterteilung: **25.03.2009**
(21) Anmeldenummer: 06025432.3
(22) Anmeldetag: 08.12.2006
(51) Int. Cl.: H04W 12/06

(54) **Verfahren und Vorrichtungen für die Autorisierung von Modulen eines Mobilfunkgerätes**
Method and apparatus for authorisation of modules of a mobile radio device
Procédé et dispositifs pour l'autorisation des modules d'un appareil radiotéléphonique mobile

(30) Priorität: 23.12.2005 DE 102005062131
(43) Veröffentlichungstag der Anmeldung: 27.06.2007
(73) Patentinhaber: Giesecke & Devrient GmbH, 81677 München (DE)
(72) Erfinder: Garbers, Christian, 85774 Unterföhring (DE); Graf, Hans, 83026 Rosenheim (DE); Finkenzeller, Klaus, 85774 Unterföhring (DE)

(56) Entgegenhaltungen:
- DE-A1- 10 053 897
- DE-A1- 10 127 123
- DE-A1- 10 128 948
- GB-A- 2 324 004

## Beschreibung

Die Erfindung liegt auf dem Gebiet der Mobilfunktechnik und betrifft insbesondere Mobilfunktelefone, die mit Merkmalen ausgestattet sind, die eine kontaktlose Schnittstelle, insbesondere eine NFC-Schnittstelle (Near Field Communication), aufweisen.

Die NFC-Technik ermöglicht eine kontaktlose Kommunikation im Nahbereich. Das dabei eingesetzte Verfahren zur Datenübertragung wird in ähnlicher Form auch bei kontaktlosen Chipkarten angewendet und erlaubt einen Datenaustausch bis zu einer Distanz von 20 Zentimetern. Ein Datenaustausch erfolgt in der Regel durch bloße Annäherung zweier mit einer NFC-Schnittstelle versehener Endgeräte.

Die NFC-Technik kann auch in Mobilfunkendgeräten eingesetzt werden, um deren Funktionalitäten zu erweitern. Mobile Endgeräte der neueren Generation verfügen teilweise bereits über eine zusätzliche kontaktlose Schnittstelle für den Nahbereich. Hierzu ist im mobilen Endgerät eine Antenne integriert, über die ein Datenaustausch mit einem externen weiteren ebenfalls für die NFC-Kommunikation geeigneten Gerät, beispielsweise einem tragbaren Datenträger wie einer Chipkarte, einem Kartenleser, etc. erfolgt. Ferner überwacht eine zusätzliche Steuerungseinheit, beispielsweise ein sogenannter Base-Band-Controller die Datenübertragung.

Die vorstehend erwähnte Technik ist insbesondere für Anwendungen interessant, die einen Datenaustausch zwischen einem mobilen Endgerät und anderen elektronischen Geräten erfordern, wie z. B. Bankgeschäfte ("mobile banking"), Ticketverkauf, elektronisch gesteuerte Zugangskontrollen, etc.

Da diese Anwendungen den Austausch von sicherheitskritischen Daten erfordern, wie z. B. Bankdaten des Benutzers, persönliche Daten oder sonstige sensible Daten, ist es notwendig, dass der Datenaustausch über einen sicheren Übertragungskanal erfolgt. Mobile Endgeräte mit NFC-Schnittstelle verfügen daher häufig über ein Sicherheitselement, das in der Regel als kryptografisch gesicherter Chip ausgebildet ist, welcher die sicherheitskritischen Daten speichert und verarbeitet. Das Sicherheitselement verfügt in der Regel über keine direkte Verbindung zu dem Base-Band-Controller und kann nur indirekt über die NFC-Schnittstelle von diesem angesprochen werden.

Im Endgerät ist ferner standardmäßig eine SIM-Karte vorgesehen (Subscriber Identity Module) bzw. in Endgeräten der neueren, dritten Generation eine USIM-Karte (Universal Subscriber Identity Module). Auf der SIM/USIM-Karte sind alle für die Benutzung des mobilen Endgeräts notwendigen Informationen und weitere den Nutzer und/oder den Netzbetreiber oder Dienstanbieter identifizierende Informationen gespeichert. Die SIM/USIM - Karte ist zwingend notwendig, um das mobile Endgerät nach dem Einschalten desselben im Netz anzumelden. Die SIM/USIM-Karte trägt die personalisierten Daten des Gerätenutzers und weist somit eineindeutig auf die Identität des Mobiltelefon-Benutzers hin. Üblicherweise weist sie auch einen Speicher auf, so dass es möglich ist, zusätzliche Daten auf der Karte zu hinterlegen, wie beispielsweise Adressen, Telefonnummern, E-Mails, SMS (Short Message Service) und andere persönliche Daten.

Bei mobilen Endgeräten nach dem Stand der Technik besteht keine kommunikationstechnische Verbindung zwischen der standardmäßig vorgesehenen SIM/USIM -Karte und den autorisierungsbedürftigen Modulen, wie insbesondere der NFC-Schnittstelle und/oder weiteren NFC-bezogenen Modulen bzw. Bauteilen. Es können daher auch keine Daten zwischen diesen Einheiten ausgetauscht werden. Auch zwischen der SIM/USIM-Karte und dem bereits erwähnten Sicherheitselement findet keine direkte Kommunikation statt.

Für den Datenaustausch zwischen den in dem mobilen Endgerät vorgesehenen Einheiten bzw. Modulen ist grundsätzlich das Betriebssystem zuständig. Das Betriebssystem regelt unter anderem wann, wie lange welches Element über welche Schnittstelle und gegebenenfalls mit welcher Autorisierungsmaßnahme welches Modul angesprochen werden kann.

Um die Flexibilität des Betriebssystems zu erweitern, ist es im Stand der Technik bekannt, Betriebssysteme mit nachladbarem Programmcode zur Verfügung zu stellen, d.h. nach Kartenausgabe kann Programmcode verändert oder ergänzt werden. Weit verbreitet sind Mobiltelefone mit einem für Dritte programmierbaren Betriebssystem. Hierzu zählen z. B. Java-Implementierungen wie J2ME oder Symbian-Betriebssysteme, die in C bzw. C++ programmierbar sind. Des Weiteren sind auch Dual-Interface-Chipkarten bekannt, also Chipkarten, die sowohl eine kontaktlose als auch eine kontaktbehaftete Schnittstelle aufweisen (also Schnittstellen nach den Normen ISO 7816 und ISO 14443). Derartige Datenträger sind bereits auf dem Markt verfügbar, wie z. B. die SmartCaféExpert 3.0 Chipkarte von Giesecke & Devrient.

Ein grundsätzlicher Nachteil der vorstehend genannten System-Architekturen von Mobiltelefonen mit NFC-Schnittstelle ist darin zu sehen, dass keine Zuordnung zwischen SIM/USIM-Karte und dem jeweiligen NFC-Bauteil besteht. Daher können das Sicherheitselement und damit auch alle im mobilen Endgerät freigeschalteten NFC-Anwendungen in Verbindung mit S/M/USIM-Karten beliebiger Betreiber verwendet werden.

Im Zusammenhang mit SIM/USIM-Karten ist es aus dem Stand der Technik bekannt, ein so genanntes SIM-Lock vorzusehen, also einen Sperrmechanismus für das Betreiben des mobilen Endgeräts. Endgeräte, die ein solches SIM-Lock aufweisen, sind in der Regel so konfiguriert, dass ein Sicherheitscode eingegeben werden muss, bevor das Endgerät mit einer anderen SIM/USIM-Karte verwendet werden kann. Damit kann die Nutzung des jeweiligen Endgerätes auf eine bestimmte SIM/USIM-Karte beschränkt werden. Für bekannte Endgeräte lassen die meisten Netzbetreiber und andere Dienstanbieter ein SIM-Lock von den Geräteherstellern in ihre Endgeräte implementieren, so dass für diese Endgeräte ausschließlich eine SIM/USIM-Karte verwendet werden kann, die von dem jeweiligen Netzbetreiber ausgegeben wird oder von diesem autorisiert wurde. Die Nutzung eines solchermaßen "geschützten" Endgerätes bzw. Mobiltelefons in anderen Mobilfunknetzen wird mit diesem Mechanismus verhindert.

Aus der GB-A-2 324 004 ist ein Verfahren bekannt, bei dem nach dem Einschalten oder dem Einsetzen einer SIM-Karte in ein mobiles Endgerät die Kennung eines Diensteanbieters aus der SIM-Karte ausgelesen und mit einer im Endgerät hinterlegten Kennung verglichen wird. Bei Übereinstimmung wird das Endgerät freigeschaltet.

Der aus dem Stand der Technik bekannte Sperrmechanismus betrifft aber das Endgerät an sich und damit die komplette Nutzung des Endgerätes überhaupt. Einzelne Module bzw. Leistungsmerkmale des Endgerätes können mit diesem Sperrmechanismus nicht autorisiert werden.

Wünschenswert ist somit eine gezielte Sperrfunktion, die auf die Nutzung von autorisierungsbedürftigen Modulen des Endgerätes ausgelegt ist.

Besonders relevant ist dies bei Endgeräten, die sich durch eine erhöhte Funktionalität auszeichnen und insbesondere mit einer NFC-Schnittstelle und gegebenenfalls mit weiteren NFC-Modulen ausgebildet sind. Das Konzept eines SIM-Locks kann jedoch nicht auf diese Geräte angewendet werden, da - wie vorstehend erwähnt - eine Verbindung zwischen SIM/USIM-Karte und den NFC-Modulen nicht besteht.

Die vorliegende Erfindung hat sich deshalb zur Aufgabe gestellt, einen Weg aufzuzeigen, mit dem die Sicherheit von Endgeräten, insbesondere von Mobiltelefonen, erhöht werden, während gleichzeitig eine erhöhte Funktionalität der Endgeräte zur Verfügung gestellt werden kann. Darüber hinaus soll das Einsatzgebiet von Endgeräten erweitert werden, ohne dass die Gefahr besteht, einzelne autorisierungsbedürftige Dienstmerkmale eines Endgerätes durch den Austausch von SIM/USIM-Karten auch ohne eine Autorisierungsmaßnahme zu verwenden. Ein Ziel ist es deshalb, eine Zuordnung zwischen einer SIM/USIM-Karte und autorisierungsbedürftigen Modulen, insbesondere einem oder mehreren NFC-Bauteilen und/oder einem Sicherheitselement, zu ermöglichen.

Diese Aufgabe wird erfindungsgemäß durch ein Verfahren zur Prüfung einer Autorisierung zur Nutzung von autorisierungsbedürftigen Diensten oder Modulen eines mobilen, elektronischen Endgerätes gelöst, wobei das Endgerät mit einer SIM/USIM-Karte und mit zumindest einem von einem Dienstanbieter mittelbar oder unmittelbar autorisierbaren Modul ausgestattet ist, wobei eine den Dienstanbieter identifizierende Kennung aus der SIM/USIM-Karte ausgelesen und mit einer in dem Endgerät hinterlegten Referenz-Kennung auf Übereinstimmung verglichen wird, wobei ausschließlich bei einer festgestellten Übereinstimmung die autorisierungsbedürftigen Module im Endgerät aktiviert und damit zur Nutzung autorisiert werden.

Grundsätzlich ist es vorgesehen, dass der Dienstanbieter das autorisierungsbedürftige Modul für einen Nutzer autorisieren kann. Der Dienstanbieter kann die Autorisierung unmittelbar selbst oder mittelbar über einen ihm zugeordneten Gerätehersteller veranlassen.

Darüber hinaus wird diese Aufgabe durch ein Mobilfunkgerät mit autorisierungsbedürftigen Modulen gelöst, umfassend:
- eine SIM/USIM-Karte,
- zumindest ein autorisierungsbedürftiges Modul,
- ein Einlesemodul, das dazu ausgelegt ist, eine einen Dienstanbieter identifizierende Kennung aus der SIM/USIM-Karte einzulesen,
- ein Referenzmodul, das dazu ausgelegt ist, eine im Mobilfunkgerät hinterlegte Referenz-Kennung zu erfassen,
- einen Komparator, der dazu bestimmt ist, die den Dienstanbieter identifizierende Kennung mit der Referenz-Kennung auf Übereinstimmung zu vergleichen und
- ein Autorisierungsmodul, das das autorisierungsbedürftige Modul nur dann mit Spannung versorgt, falls der Komparator eine Übereinstimmung festgestellt hat.

In der bevorzugten Ausführungsform ist das Mobilfunkgerät, insbesondere das Betriebssystem, mit einem Base-Band-Controller ausgestattet, der zumindest das autorisierungsbedürftige Modul steuert.

Wenn mehrere autorisierungsbedürftige Module in dem Mobilfunkgerät ausgebildet sind, dann ist es erfindungsgemäß vorgesehen, dass diese jeweils separat auf Autorisierung geprüft werden. Es kann also sein, dass ein Mobilfunkgerät durchaus für ein bestimmtes autorisierungsbedürftiges Modul von dem Nutzer genutzt werden kann, während der Nutzer für ein anderes autorisierungsbedürftiges Modul desselben Mobilfunkgerätes nicht autorisiert ist.

Bei den autorisierungsbedürftigen Modulen handelt es sich in der hauptsächlichen Anwendung der vorliegenden Erfindung um einzelne, separat zu-oder abschaltbare Bauteile, Schnittstellen oder Leistungsmerkmale des Endgerätes, insbesondere NFC-bezogene Dienste oder NFC-bezogene Module. Es sollen von dieser Erfindung jedoch auch alle weiteren autorisierungsbedürftigen Module umfasst sein, die separat und unabhängig von der restlichen Funktionalität des Endgerätes aktivierbar sind.

Weitere Aufgabenlösungen sind in den Gegenständen gemäß den beiliegenden unabhängigen Hauptansprüchen zu sehen, insbesondere in einem Mobilfunkgerät und in einem Computerprogrammprodukt.

Eine alternative Aufgabenlösung sieht ein Speichermedium vor, das zur Speicherung des vorstehend beschriebenen, microcomputerimplementierten Verfahrens bestimmt ist und von einem Microcomputer lesbar ist.

Darüber hinaus ist es möglich, dass einzelne Komponenten des vorstehend beschriebenen Verfahrens in einer verkaufsfähigen Einheit und die restlichen Komponenten in einer anderen verkaufsfähigen Einheit - sozusagen als verteiltes System - ausgeführt werden können.

Die nachfolgenden Begriffsdefinitionen, die allgemeine Beschreibung der Erfindung, vorteilhafte alternative Ausführungsformen derselben, Vorteile und vorteilhafte Weiterbildungen oder einzelne Merkmale werden nachstehend anhand der verfahrensgemäßen Lösung der vorstehend beschriebenen Aufgabe beschrieben. Das dort Gesagte soll entsprechend auch auf die anderen Aufgabenlösungen anzuwenden sein und kann entsprechend übertragen werden, um unnötige Wiederholungen zu vermeiden.

Im Rahmen dieser Erfindung soll der Begriff "Mobilfunkgerät" alle mobilen elektronischen Endgeräte umfassen, die über ein Mobilfunknetz betrieben werden. Darunter fallen Handys bzw. Mobilfunkgeräte, PDA's oder andere mobile elektronische Geräte zum Datenaustausch.

Ein "Dienstanbieter" ist ein Anbieter von Diensten auf dem Gebiet des Mobilfunkbereichs und kann z. B. ein Netzbetreiber sein, der eigene Netze hat oder fremde Netze zukauft, oder ein Provider, der Mobilfunkdienste anbietet. Zur Charakterisierung bzw. eineindeutigen Kennzeichnung eines Dienstanbieters wird jedem Dienstanbieter eine ihn identifizierende Kennung zugeordnet. Über diese Kennung kann der Dienstanbieter also ermittelt werden.

Der Begriff "NFC-Dienste" umfasst alle Funktionalitäten eines Endgerätes, die im Zusammenhang mit der NFC-Technologie relevant sind, insbesondere eine oder mehrere NFC-Schnittstellen bzw. NFC-Interfaces, den über diese Schnittstelle abgewickelten Datenaustausch und andere Module bzw. Funktionen, die im Rahmen der NFC-Technologie angewendet werden können. Darunter fällt unter anderem ein Sicherheitselement, das zur Verarbeitung von sicherheitskritischen Daten ausgebildet ist, und insbesondere sicherheitskritische Daten speichert und/oder an andere Einheiten überträgt. Üblicherweise wird das Sicherheitselement durch einen Smart-Card Chip ausgebildet. In der Regel ist im Mobiltelefon ein Base-Band-Controller ausgebildet, der zur Steuerung der NFC-Schnittstelle im Mobiltelefon vorgesehen ist. Darüber hinaus können weitere Module vorgesehen sein, die im Zusammenhang mit der NFC-Schnittstelle verwendet werden. Dabei ist es unerheblich, ob diese Module als Hardware- oder als Software-Module ausgebildet sind. Als Beispiele für anderweitige NFC-Dienste sind neben dem vorstehend erwähnten Sicherheitselement noch spezifische Speicherbereiche, kryptografische Algorithmen und/oder andere Datenverarbeitungselemente auf dem Endgerät zu nennen.

Die nachstehende Beschreibung ist in Hinblick auf NFC-Dienste bzw. NFC-Funktionen beschrieben. Die in diesem Zusammenhang erwähnten Merkmale, Vorteile und alternativen Ausführungsformen gelten jedoch ebenso für andere autorisierungsbedürftige Module des Endgerätes.

Die SIM/USIM-Karte ist üblicherweise personalisiert und trägt neben einer Identifizierung des jeweiligen Handy-Benutzers auch Informationen über den Dienstanbieter bzw. hier den Netzbetreiber. Über die SIM/USIM-Karte kann deshalb der jeweilige Netzbetreiber identifiziert werden, indem aus der SIM/USIM-Karte der entsprechende Datensatz ausgelesen wird.

Darüber hinaus sind im Mobiltelefon bzw. im Endgerät selbst Informationen hinterlegt, die eine - im mathematischen Sinne - eindeutige Zuordnung zu dem jeweiligen Netzbetreiber bzw. Dienstanbieter ermöglichen. Für die Hinterlegung dieser Information im Mobiltelefon gibt es mehrere Möglichkeiten. Zum einen ist es möglich, diese den Dienstanbieter identifizierende Information im Betriebssystem des Mobiltelefons zu speichern. Zum anderen ist es möglich, diese Informationen in anderen zugeordneten Modulen abzulegen, z. B. in Kontrollapplikationen oder auch in externen Einrichtungen, die über entsprechende Schnittstellen mit dem Endgerät in Datenaustausch stehen. Diese Informationen werden als Referenz-Kennung bezeichnet. Die Referenz-Kennung ist im Allgemeinen endgerätbezogen. Mit anderen Worten weist die Referenz-Kennung einen mittelbaren oder unmittelbaren Bezug (Zuordnung) zu dem Endgerät auf.

Im Gegensatz zur Referenz-Kennung ist die Kennung SIM/USIM-kartenbezogen. Mit anderen Worten weist die Kennung einen unmittelbaren Bezug zu der SIM/USIM-Karte auf und ist entweder unmittelbar in der SIM/USIM-Karte abgelegt oder in zugeordneten Modulen, die der SIM/USIM-Karte über eine eineindeutige Relation zugeordnet werden können.

Sowohl die Kennung als auch die Referenz-Kennung dienen zur Identifikation des Dienstanbieters bzw. Netzbetreibers, sind aber in unterschiedlichen Modulen des Endgerätes hinterlegt.

Erfindungsgemäß ist es nun vorgesehen, dass die Kennung mit der Referenz-Kennung verglichen wird. Nur bei Identität, also bei Übereinstimmung zwischen den zu vergleichenden Größen, werden die autorisierungsbedürftigen Module, insbesondere die NFC-Dienste des Mobilfunkgerätes, als zur Nutzung autorisiert gekennzeichnet. Anderenfalls, also bei fehlender Übereinstimmung, ist eine Nutzung der NFC-Merkmale nicht möglich.

Vorteilhafterweise können erfindungsgemäß die Nutzung von NFC-Diensten, insbesondere die Nutzung des Sicherheitselementes, oder von anderen autorisierungsbedürftigen Diensten oder Leistungsmerkmalen in Verbindung mit "fremden" SIM/USIM-Karten (also SIM/USIM-Karten von anderen Dienstanbietern bzw. Netzbetreibern) sicher verhindert werden.

Falls z. B. ein Netzbetreiber ein von ihm subventioniertes NFC-Gerät an Nutzer X verkauft, der sein Gerät an einen anderen Nutzer Y weiterverkauft, und dieser Nutzer Y die SIM/USIM-Karte eines anderen Netzbetreibers einsetzt, so kann erfindungsgemäß sicher verhindert werden, dass der Nutzer Y die NFC-bezogenen Dienste und/oder das Sicherheitsmodul verwenden kann.

Grundsätzlich kann die erfindungsgemäße Lehre durch drei unterschiedliche Möglichkeiten oder Varianten konkret technisch umgesetzt werden. Die erste und zweite Variante, die nachstehend detailliert beschrieben werden, basieren darauf, dass das Betriebssystem selbst oder dem Betriebssystem zugeordnete Module oder Applikationen erfindungsgemäß modifiziert werden, so dass eine Überprüfung der Autorisierung zur Nutzung von NFC-Diensten möglich wird. Es ist auch möglich, die erfindungsgemäßen Modifikationen in anderen Applikationen vorzunehmen, insbesondere in bestimmten Kontrollapplikationen, die nicht unmittelbar dem Betriebssystem zugeordnet sind.

Darüber hinaus gibt es neben der Modifikation des Betriebssystems oder von Applikationen noch eine weitere Möglichkeit, um die erfindungsgemäße Lehre umzusetzen, indem nämlich die SIM/USIM-Karte mit einer zusätzlichen kontaktlosen Schnittstelle ausgestattet wird und indem das Betreiben des Endgerätes insofern modifiziert wird, als dass eine Autorisierungs-Überprüfung in einem externen Gerät oder Datenträger erfolgt. Die Überprüfung kann entweder in zyklischen Abständen erfolgen oder nur dann erfolgen, wenn ein autorisierungsbedürftiges Modul, wie insbesondere ein NFC-Dienst, aktiviert werden soll.

In der ersten Variante ist es vorgesehen, dass ein bereits vorhandenes SIM/USIM-Lock im Endgerät modifiziert wird. Üblicherweise ist das bereits vorhandene SIM-Lock so ausgebildet, dass nach dem Einschalten des Mobiltelefons die Betriebssystem-Software die Kennung des Netzbetreibers aus der SIM/USIM-Karte ausliest und mit der Referenz-Kennung vergleicht, die in der Betriebssystem-Software hinterlegt ist. In der Regel findet der vorstehend geschilderte Vorgang noch vor der Abfrage der PIN statt. Abhängig von der Überprüfung wird das Endgerät im Stand der Technik vollständig blockiert oder vollständig zur Nutzung frei geschaltet.

Erfindungsgemäß wird dieses Mechanismus nun dahingehend modifiziert und erweitert, dass die entsprechenden autorisierungsbedürftigen Module, wie insbesondere NFC-Module bzw. NFC-Devices und/oder das Sicherheitselement des Mobiltelefons, jeweils einzeln und separat nur dann mit Spannung versorgt werden, falls die Überprüfung eine Übereinstimmung zwischen Kennung und Referenz-Kennung ergab. Mit anderen Worten werden die NFC-bezogenen Module des Mobiltelefons nur dann aktiviert, wenn die Nutzung dieser Module als autorisiert erkannt worden sind. In der bevorzugten Ausführungsform der Erfindung wird der bekannte Sperrmechanismus erweitert, in dem er die Steuereinheit des Endgerätes, insbesondere den Base-Band-Controller, -abhängig von dem Ergebnis der Überprüfungsteuert.

Anderenfalls, falls also keine Übereinstimmung zwischen der Kennung und der Referenz-Kennung festgestellt werden konnte, können erfindungsgemäß mehrere Verfahrensalternativen ausgelöst werden, die grundsätzlich unabhängig von den beschriebenen Varianten sind. Welche Verfahrensalternative ausgewählt werden soll ist voreinstellbar bzw. konfigurierbar. Ein weiteres vorteilhaftes Merkmal ist darin zu sehen, dass ebenfalls konfigurierbar ist, zu welchem Anteil die NFC-Dienste deaktiviert werden. Es ist mit anderen Worten möglich, hier einzustellen, ob bei fehlender Übereinstimmung grundsätzlich alle NFC-Dienste deaktiviert werden sollen oder nur ein Ausschnitt derselben oder gegebenenfalls nur für eine bestimmte Zeitdauer.

Zum einen ist es möglich, dass das Telefon eine Fehlermeldung ausgibt und nicht zur PIN-Abfrage weitergeht, so dass das Telefon insgesamt blockiert ist.

Zum anderen ist es möglich, dass das Telefon nach einer Ausgabe einer Fehlermeldung eine spezifische Meldung ausgibt, z. B. in Sinne von "NFC nicht verfügbar" und mit der PIN-Abfrage fortfährt. Dann sind alle restlichen Merkmale, also alle nicht-autorisierungsbedürftigen Merkmale und alle erfolgreich autorisierten Merkmale, für den Nutzer auf dem Endgerät verfügbar. In alternativen Ausführungsformen der Erfindung kann es vorgesehen sein, dass noch alternative Autorisierungs-Mechanismen angeboten werden, die es dem Nutzer des Gerätes ermöglichen, aufgrund anderer Autorisierungs-Kriterien, dennoch auf die NFC-Dienste zuzugreifen oder, dass bei fehlender Autorisierung zumindest die Notfunktionen genützt werden können.

In der zweiten Variante ist es vorgesehen, dass eine Kontrollapplikation im Betriebssystem des Mobiltelefons erfindungsgemäß modifiziert wird. Die Kontrollapplikation ist dabei üblicherweise Bestandteil des Betriebssystems und kann dem Base-Band-Controller zugeordnet oder als eigenständige Komponente dem Betriebssystem zugeordnet sein. Die Kontrollapplikation ist so ausgelegt, dass sie die Kommunikationskanäle in Bezug auf die NFC-Devices überwacht. Die Überwachung erfolgt erfindungsgemäß, indem die Kennung mit der Referenz-Kennung auf Übereinstimmung verglichen wird. Dabei kann die Referenz-Kennung im Betriebssystem oder in der Kontrollapplikation hinterlegt sein. Bei fehlender Übereinstimmung wird die Versorgungsspannung der NFC-Bauteile und/oder des Sicherheitselementes abgeschaltet. Die Kontrollapplikation ist vollständig vom Dienstanbieter bzw. vom jeweiligen Netzwerkbetreiber kontrolliert. Mittels der eingangs beschriebenen bekannten Techniken kann die Kontrollapplikation von einem Dritten, hier von dem Dienstanbieter, programmiert werden und in das Mobiltelefon geladen werden. Für das Laden der Kontrollapplikation gibt es mehrere Möglichkeiten. Es ist möglich, dass sie unmittelbar nach dem erstmaligen Einlegen der SIM/USIM-Karte in das Mobiltelefon beim Starten desselben geladen wird oder zu einem späteren Zeitpunkt.

In vorteilhaften Weiterbildungen der Erfindung ist es vorgesehen, dass die Kontrollapplikation neben den vorstehend erwähnten Modifikationen zur veränderten Steuerung der NFC-Devices noch weitere Applikationen enthält. Diese weiteren Applikationen können im Bedarfsfall durch die Kontrollapplikation auf das Sicherheitselement geladen werden.

In der dritten Variante ist es vorgesehen, dass die erfindungsgemäße Überprüfung zwischen Kennung und Referenz-Kennung in einem externen Bauteil, insbesondere in einem externen Datenträger, der über eine kontaktlose Schnittstelle an das Endgerät angebunden ist, erfolgt. Bei dem externen Datenträger kann es sich z. B. um ein RFID-Lesegerät oder um ein weiteres NFC-Gerät handeln. Diese Variante hat den Vorteil, dass das Endgerät einen verringerten datentechnischen Verarbeitungsaufwand aufweist, da dieser ausgelagert ist und beansprucht somit insgesamt weniger die Ressourcen des Endgerätes.

Bei der dritten Variante ist es vorgesehen, dass die SIM/USIM-Karte des Mobiltelefons mit einer zusätzlichen kontaktlosen Schnittstelle ausgestattet ist. Dabei kann es sich z. B. um eine Dual-Interface-Chip-Karte handeln. Wenn nun das Mobiltelefon in den Kommunikationsbereich eines Kommunikationsmittels zum Zwecke der NFC-Kommunikation gebracht wird, so ist es vorgesehen, dass in einem ersten Schritt Daten aus der SIM/USIM-Karte durch das Kommunikationsmittel ausgelesen werden. In einem zweiten Schritt wird der erfindungsgemäße Vergleich zwischen Kennung und Referenz-Kennung ausgeführt. Dies erfolgt vorzugsweise in dem externen Gerät bzw. in dem externen Datenträger. In weiteren Schritten können - abhängig von dem Ergebnis der Überprüfung auf Autorisierung zur Nutzung der NFC-Dienste - weitere Schritte getriggert werden (bei erfolgreicher Autorisierung: Aktivierung der NFC-Dienste und bei fehlender Autorisierung: Deaktivierung der NFC-Dienste und gegebenenfalls weiterer Dienstmerkmale des Endgerätes). Die ausgelesenen Daten umfassen die Kennung des Dienstanbieters. Aus den ausgelesenen Daten kann gegebenenfalls eine Berechtigung zur Kommunikation mit den NFC-Devices und/oder mit dem Sicherheitselement des Mobiltelefons abgeleitet werden. Üblicherweise erfolgt dies über einen Vergleich der erfassten Kennung mit der Referenz-Kennung.

Falls keine Autorisierung zur Nutzung der NFC-bezogenen Dienste festgestellt werden kann, so kann die weitere Kommunikation mit den NFC-bezogenen Diensten ganz oder teilweise eingestellt werden.

Die dritte Variante basiert darauf, dass die SIM/USIM-Karte mit einer zusätzlichen kontaktlosen Schnittstelle ausgebildet wird. Diese zusätzliche kontaktlose Schnittstelle dient dazu, die Kennung des Dienstanbieters an die externe Einheit zu übertragen, während die andere kontaktlose Schnittstelle, insbesondere die NFC-Schnittstelle, dazu dient, die Referenz-Kennung an die externe Einheit zum Vergleich auf Übereinstimmung in der externen Einheit zu übertragen.

In alternativen Weiterbildungen der Erfindung ist es vorgesehen, dass die NFC-Dienste nicht nur bei fehlender Übereinstimmung zwischen Kennung und Referenz-Kennung deaktiviert werden, sondern zusätzlich auch dann, wenn beispielsweise - im Falle der dritten Variante - keine zusätzliche kontaktlose Schnittstelle auf der SIM/USIM-Karte vorgesehen ist. Darüber hinaus ist es möglich, dass die Deaktivierung auch dann getriggert wird, falls die Prüfung auf Autorisierung, insbesondere der Vergleich zwischen Kennung und Referenz-Kennung, nicht erfolgreich war oder nicht erfolgreich abgeschlossen werden konnte. Es ist auch möglich, eine Deaktivierung der NFC-Dienste zu veranlassen, falls bereits ein Auslesen der Kennung aus der SIM/USIM-Karte nicht möglich ist. Mit anderen Worten ist es in dieser Weiterbildung also konfigurierbar, in welchen Fällen, insbesondere aufgrund welcher Parameter, eine Deaktivierung der NFC-Funktionalität erfolgen soll.

Darüber hinaus ist ein vorteilhaftes Merkmal der Erfindung darin zu sehen, dass es einstellbar ist, nach welchen Kriterien die Autorisierungsprüfung ausgeführt werden soll. Insbesondere kann es eingestellt werden, ob eine Autorisierung in zyklischen Abständen erfolgen soll, oder z. B. nur dann, wenn ein autorisierungsbedürftiger Dienst in Anspruch genommen werden soll. Im letzten Fall kann sichergestellt werden, dass eine Autorisierung auch nur dann ausgeführt wird, wenn dies notwendig ist, nämlich wenn z.B. ein NFC-Dienst des Endgerätes auch genutzt werden soll. In anderen Anwendungen, die z. B. ein erhöhtes Sicherheits-Niveau haben und bei denen der Sperrfunktion von bestimmten NFC-Diensten eine verstärkte Bedeutung zukommt, kann es vorgesehen sein, dass die Autorisierungsprüfung grundsätzlich nach Einschalten des Handys erfolgt. Alternativ kann die Autorisierungsprüfung auch zu späteren Zeitpunkten ausgelöst werden.

Ein Vorteil der erfindungsgemäßen Lösung ist darin zu sehen, dass die Erfindung auch ohne Änderung von bestehenden Komponenten eines Endgerätes eingesetzt werden kann, indem die erfindungsgemäße Lösung sozusagen modulartig ausgebildet ist und in einem separaten Baustein bzw. in einem separaten Modul als zusätzliche Funktionalität dem Endgerät hinzugefügt werden kann. Dieses separate Modul kann einerseits unmittelbar im Endgerät selbst integriert sein oder kann andererseits in einem externen Bauteil mit entsprechendem Datenaustausch über entsprechende Schnittstellen ausgebildet sein. Darüber hinaus ist es möglich, das Modul als Software- oder als Hardware-Modul auszubilden.

Zusätzliche, vorteilhafte Ausführungsformen ergeben sich aus den Unteransprüchen.

In der folgenden detaillierten Figurenbeschreibung werden nicht einschränkend zu verstehende Ausführungsbeispiele mit deren Merkmalen und weiteren Vorteilen anhand der Zeichnung besprochen. Es zeigen:
- Fig. 1: eine übersichtsartige Darstellung von Bauteilen oder Modulen eines Mobilfunkgerätes mit NFC-Funktionalität und
- Fig. 2: eine übersichtsartig gestaltetes Ablaufschema gemäß einer bevorzugten Ausführungsform der Erfindung.

Im Folgenden wird die vorliegende Erfindung gemäß den beiliegenden Figuren im Zusammenhang mit einem Mobilfunkgerät 10 beschrieben, wobei es sich bei dem autorisierungsbedürftigen Modul um ein NFC-Modul handelt. Die Erfindung ist jedoch nicht auf die Anwendung für Mobilfunkgeräte 10 oder NFC-Module beschränkt, sondern kann auch andere elektronische mobile Geräte und andere separat oder gemeinsam aktivierbare autorisierungsbedürftige Module betreffen.

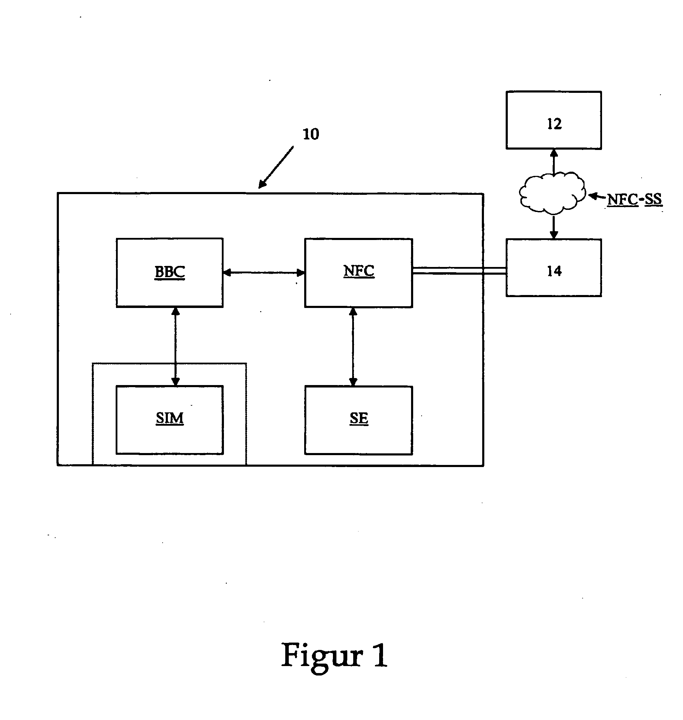

Wie in Fig. 1 dargestellt, umfasst das Mobilfunkgerät 10 neben den bisher üblichen Bestandteilen, die aus dem Stand der Technik bekannt sind, ein NFC-Device bzw. NFC-bezogene Bauteile NFC, über die NFC-Dienste des Mobilfunkgerätes abgewickelt werden. Neben den NFC-Devices NFC ist üblicherweise ein Sicherheitselement SE vorgesehen, das zur Speicherung und/oder zur Verarbeitung von sicherheitskritischen Daten auf dem Mobilfunkgerät 10 ausgelegt ist bzw. das die sicherheitskritischen Daten in Bezug auf das Mobilfunkgerät 10 über eine NFC-Schnittstelle NFC-SS überträgt. Darüber hinaus ist ein Base-Band-Controller BBC vorgesehen, der dazu bestimmt ist, die NFC-Devices NFC und/oder das Sicherheitselement SE zu steuern. Des Weiteren ist eine SIM/USIM-Karte SIM vorgesehen, die den Anwender bzw. Nutzer des Mobilfunkgerätes identifiziert und somit personalisiert ist.

Im Gegensatz zu Mobilfunkgeräten 10 aus dem Stand der Technik, bei denen kein Datenaustausch zwischen NFC-Device NFC und/oder Sicherheitselement SE und der SIM/USIM-Karte SIM vorgesehen ist, ist bei der erfindungsgemäßen Lösung zumindest indirekt ein Datenaustausch zwischen der SIM/USIM-Karte SIM und dem Base-Band-Controller BBC vorgesehen. Dies ist mit dem Pfeil zwischen den vorstehend genannten Bauteilen in Fig.1 dargestellt. Die gestrichelte Linie um die SIM/USIM-Karte SIM in Figur 1 soll zum einen verdeutlichen, dass die SIM/USIM-Karte steckbar bzw. herausnehmbar ist und zum anderen, dass sie nach dem Stand der Technik von den restlichen Bauteilen oder Modulen des Handys 10 entkoppelt war.

Erfindungsgemäß erfolgt eine Überprüfung der Autorisierung zur Nutzung der NFC-Dienste, indem eine den Dienstanbieter identifizierende Kennung K aus der SIM/USIM-Karte SIM ausgelesen wird und mit einer vorzugsweise vom Gerätehersteller im Mobilfunkgerät 10 hinterlegten Referenz-Kennung RK auf Übereinstimmung verglichen wird. Nur falls eine Übereinstimmung vorliegt, wird der Base-Band-Controller BBC so gesteuert, dass er die NFC-bezogenen Bauteile (insbesondere NFC-Devices NFC) mit Spannung versorgt. Anderenfalls, also bei fehlender Übereinstimmung findet keine Spannungsversorgung seitens des Base-Band-Controllers BBC in Bezug auf die vorstehend genannten autorisierungsbedürftigen Bauteile statt, so dass diese von dem Nutzer des Mobilfunkgerätes nicht genutzt werden können.

Die erfindungsgemäße Autorisierungsprüfung zur Nutzung von NFC-Diensten des Mobilfunkgerätes 10 erfolgt vorzugsweise in einem Autorisierungsmodul. Das Autorisierungsmodul kann unterschiedlich ausgebildet sein. Zum einen ist es möglich, dass das Autorisierungsmodul ein Erweiterungsmodul für ein bekanntes SIM-Lock aus dem Stand der Technik ist. Darüber hinaus ist es möglich, dass das Autorisierungsmodul ein Modul innerhalb des Betriebssystems des Mobilfunkgerätes 10 ist oder ein Modul innerhalb einer Applikation. Es ist jedoch auch möglich, dass das Autorisierungsmodul aus mehreren Sub-Modulen besteht und zum einen eine zusätzliche kontaktlose Schnittstelle in der SIM/USIM-Karte SIM des Mobiltelefons 10 umfasst und als weiteres Sub-Modul einen externen Datenträger 12 umfasst, der über eine Schnittstelle, insbesondere die NFC-Schnittstelle NFC-SS an das Mobilfunkgerät 10 angeschlossen ist. Über eine im Mobiltelefon 10 integrierte Antenne 14 kann die NFC-Schnittstelle NFC-SS mit dem externen kontaktlosen Datenträger 12 kommunizieren. Bei dem externen Datenträger 12 kann es sich um ein RFID-Lesegerät oder um eine zweite NFC-Schnittstelle NFC-SS handeln.

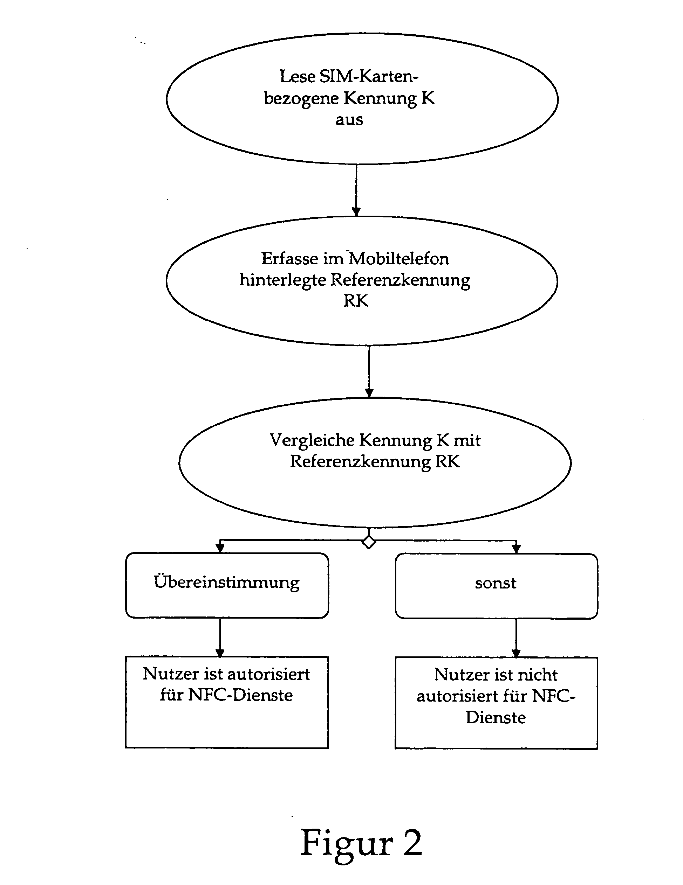

Im Folgenden sei in Zusammenhang mit Fig. 2 der grundlegende Ablauf gemäß der bevorzugten Ausführungsform der Erfindung dargestellt. In einem ersten Schritt wird die Kennung K aus der SIM/USIM-Karte SIM ausgelesen. Die Kennung K identifiziert den Netzbetreiber. In einem zweiten Schritt wird die im Mobiltelefon 10 hinterlegte Referenz-Kennung RK erfasst. In einem dritten Schritt, der den beiden zuerst genannten nachgeordnet ist und zu einem beliebigen späteren Zeitpunkt erfolgen kann, vergleicht das Autorisierungsmodul die Kennung K mit der Referenz-Kennung RK. Falls eine Übereinstimmung festgestellt werden kann, ist der Nutzer zur Nutzung der autorisierungsbedürftigen NFC-Dienste des Mobilfunkgerätes 10 autorisiert. In diesem Fall werden alle Bauteile bzw. Module, die in Zusammenhang mit den NFC-Diensten relevant sind, vom Base-Band-Controller BBC aktiviert und mit Spannung versorgt.

Anderenfalls, falls also keine Übereinstimmung zwischen Kennung K und Referenz-Kennung RK festgestellt werden konnte, werden die autorisierungsbedürftigen NFC-bezogenen Dienste deaktiviert.

Im zuletzt geschilderten Fall, also bei fehlender Übereinstimmung, kann die Deaktivierung der NFC-Funktionalität des Mobilfunkgerätes 10 auf unterschiedliche Weise ausgebildet sein. Vorzugsweise ist es jedoch vorgesehen, dass keine der NFC-Funktionalitäten genutzt werden kann.

Falls das Autorisierungsmodul als erweitertes und modifiziertes SIM-Lock-Modul ausgebildet ist, ist folgendes Vorgehen vorgesehen:

Nach dem Einschalten des Mobilfunkgerätes 10 liest die Betriebssystem-Software die Kennung K des Netzbetreibers aus der SIM/USIM-Karte SIM aus. Dies kann z. B. bei einer SIM/USIM-Karte SIM nach dem Standard ETSI TS 51.011 aus dem Abschnitt EF_{SPN} erfolgen. Die Referenz-Kennung RK ist üblicherweise im Mobilfunkgerät 10, insbesondere in der Betriebssystem-Software festgelegt. Nach Erfassen der Kennung K und der Referenz-Kennung RK kann das Autorisierungsmodul beide Parameter auf Übereinstimmung vergleichen. Dieser Vorgang findet üblicherweise noch vor der Abfrage der PIN (CHV1) statt. Sofern die Kennung K mit der Referenz-Kennung RK nicht übereinstimmt, versorgt der Base-Band-Controller BBC die NFC-Devices NFC und/oder das Sicherheitselement SE nicht mit Spannung. Das NFC-Device und/oder das Sicherheitselement SE werden hingegen dann mit Spannung versorgt, falls das Autorisierungsmodul eine Übereinstimmung zwischen Kennung K und Referenz-Kennung RK festgestellt hat.

Bei fehlender Übereinstimmung, also bei fehlender Autorisierung sind alternative Vorgehensweisen möglich. An dieser Stelle kann es vorkonfiguriert sein, dass das Handy - abgesehen von Notnutzungen - nicht vollständig blockiert ist, sondern dass es nur mit eingeschränkter Funktionalität nutzbar ist. Alle nicht-autorisierungsbedürftigen Merkmale können dann - wie gewohnt - zur Verfügung stehen. Es ist also möglich, dass das Autorisierungsmodul wenig restriktiv eingestellt wird und die übliche Funktion des Handys 10 aufrechterhalten bleibt, während lediglich die NFC-Funktionalität des Handys 10 deaktiviert wird. In diesem Fall kann eine Fehlermeldung ausgegeben werden, z. B. in der Form "NFC nicht verfügbar", und nach dieser führt das Mobilfunkgerät 10 die üblich vorgesehene PIN-Abfrage fort.

Ist das Autorisierungsmodul als Kontrollapplikation im Betriebssystem des Mobiltelefons 10 vorgesehen, so überwacht die Kontrollapplikation im Betriebssystem des Mobiltelefons 10, insbesondere im Base-Band-Controller BBC, die Kommunikationskanäle in Bezug auf alle NFC-Devices NFC.

In regelmäßigen zeitlichen Abständen überprüft die Kontrollapplikation die Netzbetreiberkennung K gegen die im Betriebssystem oder in der Kontrollapplikation hinterlegte bzw. gespeicherte Referenz-Kennung RK und schaltet die Versorgungsspannung der NFC-Devices NFC und/oder des Sicherheitselementes SE bei Nichtübereinstimmung ab. Damit die Kontrollapplikation vom Netzwerkbetreiber vollständig kontrolliert und gesteuert werden kann, wird sie entweder nach dem ersten Einlegen der SIM/USIM-Karte SIM beim Starten des Mobiltelefons 10 per Bootloader von der SIM/USIM-Karte SIM in das Mobiltelefon 10 geladen. Alternativ zu diesem Vorgehen ist es möglich, dass die Kontrollapplikation von einem WAP/Internetserver über das Mobilfunknetz herunter geladen wird. Dies ist z. B. durch ein von der SIM/USIM-Karte SIM generiertes proaktives Kommando, insbesondere durch den Befehl LAUNCH BROWSER Befehl möglich (vgl. ETSI TS 51.014 bzw. 31.111 und 102 223). In alternativen Ausführungsformen sind hier auch andere Befehle bzw. andere Protokolle einsetzbar.

In einer vorteilhaften Weiterbildung der Erfindung umfasst die Kontrollapplikation zusätzlich noch weitere Applikationen, die im Bedarfsfall durch Kontrollapplikation auf das Sicherheitselement SE geladen werden können. Die vorstehend erwähnte zweite Variante der erfindungsgemäßen Lösung, die sich auf die Kontrollapplikation im Betriebssystem des Mobiltelefons 10 bezieht, basiert also darauf, dass ein Überprüfungsmodul in dem Autorisierungsmodul vorgesehen ist, das die NFC-Schnittstelle NFC-SS von und zum NFC-Device NFC überwacht. Es ist möglich, dass das Überprüfungsmodul diese Überwachung in zyklischen Zeitabständen ausführt; ebenso ist es möglich, dass das Überprüfungsmodul die vorstehend erwähnte Überprüfung nur dann ausführt, wenn NFC-Dienste aktiviert werden sollen.

In der dritten Variante ist eine Pre-Authentisierung vorgesehen, in der das Autorisierungsmodul nicht mehr in dem Mobilfunkgerät 10 ausgebildet ist, sondern in einem externen Datenträger 12, der über eine kontaktlose Schnittstelle mit dem Mobilfunkgerät 10 in Datenaustausch steht. Bei dem externen Datenträger 12 kann es sich um ein RFID-Lesegerät oder um ein weiteres NFC-Device NFC handeln. Auf dem externen Datenträger 12 läuft das Autorisierungsmodul als separate Applikation und führt die erfindungsgemäße Überprüfung aus. Dieser Aufbau ist in Figur 1 dargestellt.

Dazu ist es notwendig, dass die SIM/USIM-Karte SIM des Mobiltelefons 10 mit einer zusätzlichen kontaktlosen Schnittstelle, z. B. einer Dual-Interface-Karte ausgestattet ist. Wird das Mobilfunktelefon 10 in den Kommunikationsbereich eines externen Datenträgers 12 gebracht, so wird zumindest die Kennung K aus der SIM/USIM-Karte SIM durch den externen Datenträger 12 ausgelesen. Dies erfolgt vorzugsweise über die zusätzliche kontaktlose Schnittstelle. Die Referenz-Kennung RK kann in dem externen Datenträger 12 abgelegt sein oder im Mobiltelefon 10. Falls die Referenz-Kennung RK im Mobiltelefon 10 abgelegt ist, so wird diese über eine weitere Schnittstelle, insbesondere die NFC-Schnittstelle NFC-SS an den externen Datenträger 12 zum Vergleich auf Übereinstimmung mit der Kennung K übertragen. Das im externen Datenträger 12 geladene Autorisierungsmodul vergleicht dann die Kennung K mit der Referenz-Kennung RK und kann abhängig von dem Bestehen oder Fehlen der Übereinstimmung die weitere Kommunikation über die NFC-Schnittstelle NFC-SS ganz oder teilweise einstellen.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Für einen einschlägigen Fachmann ist es insbesondere offensichtlich, dass die Erfindung teilweise oder vollständig in Soft- und/oder Hardware und/oder auf mehrere physikalische Produkte - dabei insbesondere auch Computerprogrammprodukte - verteilt realisiert werden kann.

## Patentansprüche

1. Verfahren zur Prüfung einer Autorisierung zur Nutzung von NFC-Modulen eines mobilen Endgeräts (10), das mit einer SIM/USIM-Karte (SIM) und mit zumindest einem NFC-Modul (NFC, NFC-SS, SE) ausgestattet ist, indem eine einen Dienstanbieter identifizierende Kennung (K) aus der SIM/USIM-Karte (SIM) ausgelesen und mit einer in dem mobilen Endgerät (10) hinterlegten Referenzkennung (RK) auf Übereinstimmung verglichen wird, wobei ausschließlich bei Übereinstimmung die NFC-Module (NFC, NFC-SS, SE) aktiviert werden, wobei die Autorisierungsprüfung in einem externen Datenträger (12) erfolgt, wobei die SIM/USIM-Karte (SIM) zum Datenaustausch mit dem RFID-Lesegerät oder weiteren NFC-Device (12) mit zumindest einer zusätzlichen kontaktlosen Schnittstelle ausgestattet ist, so dass über diese zusätzliche Schnittstelle die den Dienstanbieter identifizierende Kennung (K) und über die NFC-Schnittstelle (NFC-SS) die Referenz-Kennung (RK) an das RFID-Lesegerät oder weitere NFC-Device (12) zum Vergleich auf Übereinstimmung übertragen werden.

2. Verfahren nach Anspruch 1, wobei die Referenz-Kennung (RK) an das RFID-Lesegerät oder weitere NFC-Device (12) über eine in dem Mobilfunkgerät (10) integrierte Antenne (14) übertragen wird.

3. Verfahren nach Anspruch 1 oder 2, wobei
die NFC-Module (NFC, NFC-SS, SE) NFC-bezogene Dienste oder Funktionen eines Sicherheitselementes (SE) zur Speicherung oder zur Verarbeitung von sicherheitskritischen Daten umfassen, wobei das Sicherheitselement (SE) über eine NFC-Schruttstelle (NFC-SS) angebunden ist.

4. Verfahren nach zumindest einem der vorstehenden Ansprüche,
wobei bei nicht erfolgreicher oder nicht abgeschlossener Prüfung die NFC-Module (NFC, NFC-SS, SE) jeweils separat deaktiviert werden oder dass der Einschaltvorgang des Mobilfunkgeräts (10) nur mit eingeschränkter Funktionalität weitergeführt wird.

5. Verfahren nach zumindest einem der vorstehenden Ansprüche, wobei die Autorisierungsprüfung grundsätzlich beim Einschalten des Mobilfunkgeräts (10) oder nach konfigurierbaren Zeitintervallen oder nur bedarfsweise bei Aktivierung von NFC-Modulen (NFC, NFC-SS, SE) erfolgt.

6. Verfahren nach zumindest einem der vorstehenden Ansprüche, wobei bei mehreren NFC-Modulen (NFC, NFC-SS, SE) auf dem Mobilfunkgerät (10) die Autorisierungsprüfung für diese Module jeweils separat erfolgt, wobei die Kennung (K) und die Referenz-Kennung (RK) jeweils Abschnitte umfassen, die auf die einzelnen Module bezogen sind und getrennt behandelt werden.

7. Verfahren nach zumindest einem der vorstehenden Ansprüche, wobei ein Überprüfungsmodul im Mobilfunkgerät (10) alle Schnittstellen von NFC-Modulen (NFC-SS) überwacht.

8. Verfahren nach zumindest einem der vorstehenden Ansprüche, wobei die Autorisierungsprüfung im Betriebssystem des Mobilfunkgeräts (10) oder in einem diesem zugeordneten Autorisierungsmodul ausgeführt wird.

9. Verfahren nach zumindest einem der vorstehenden Ansprüche, wobei auf dem Mobilfunkgerät (10) ein Sperr-Mechanismus vorgesehen ist, der so erweitert wird, dass er nur bei erfolgreicher Autorisierung die NFC-Module (NFC, NFC-SS, SE) aktiviert.

10. Verfahren nach Anspruch 9, wobei der Sperr-Mechanismus als ein SIM-Lock ausgebildet ist.

11. Mobilfunkgerät (10) mit NFC-Modulen (NFC, NFC-SS, SE), umfassend:
- eine SIM/USIM-Karte (SIM),
- zumindest ein NFC-Modul (NFC, NFC-SS, SE),
- ein Einlesemodul, das dazu ausgelegt ist, eine einen Dienstanbieter identifizierende Kennung (K) aus der SIM/USIM-Karte (SIM) einzulesen,
- ein Referenzmodul, das dazu ausgelegt ist, eine im Mobilfunkgerät (10) hinterlegte Referenz-Kennung (RK) zu erfassen,
- einen Komparator, der dazu bestimmt ist, die den Dienstanbieter identifizierende Kennung (K) mit der Referenz-Kennung (RK) auf Übereinstimmung zu vergleichen und
- ein Autorisierungsmodul, das das NFC-Modul (NFC, NFC-SS, SE) nur dann mit Spannung versorgt, falls der Komparator eine Übereinstimmung festgestellt hat,
- einen externen Datenträger (12), wobei die SIM/USIM-Karte (SIM) zum Datenaustausch mit dem externen Datenträger (12) mit zumindest einer zusätzlichen kontaktlosen Schnittstelle ausgestattet ist, so dass über diese zusätzliche Schnittstelle die den Dienstanbieter identifizierende Kennung (K) und über die NFC-Schnittstelle (NFC-SS), gegebenenfalls über eine in dem Mobilfunkgerät (10) integrierte Antenne (14), die Referenz-Kennung (RK) an den externen Datenträger (12) zum Vergleich auf Übereinstimmung übertragen werden.

12. Mobilfunkgerät nach Anspruch 11, wobei das Mobilfunkgerät (10) einen Base-Band-Controller (BBC) aufweist, der zumindest die NFC-Module (NFC, NFC-SS, SE) steuert.

13. Computerprogrammprodukt, welches direkt in einen Speicher eines Mobilfunkgerätes (10) mit NFC-Modulen (NFC, NFC-SS, SE) ladbar ist, mit Programmcode-Mitteln, wobei alle Schritte eines Verfahrens nach zumindest einem der Ansprüche 1 bis 10 ausführbar sind, wenn das Programm in dem Mobilfunkgerät (10) ausgeführt wird.

## Claims

1. A method for checking an authorization for using NFC modules of a mobile terminal (10) which is equipped with a SIM/USIM card (SIM) and with at least one NFC module (NFC, NFC-SS, SE) by an identification (K) identifying a service provider being read out from the SIM/USIM card (SIM) and compared for a match with a reference identification (RK) stored in the mobile terminal (10), wherein the NFC modules (NFC, NFC-SS, SE) are activated exclusively in case of a match, wherein the authorization check is effected in an external data carrier (12), wherein the SIM/USIM card (SIM) is equipped for data interchange with the RFID reading device or further NFC device (12) with at least one additional contactless interface, so that the identification (K) identifying the service provider is transferred to the RFID reading device or further NFC device (12) via said additional interface, and the reference identification (RK) via the NFC interface (NFC-SS), for comparison for a match.

2. The method according to claim 1, wherein the reference identification (RK) is transferred to the RFID reading device or further NFC device (12) via an antenna (14) integrated in the mobile station (10).

3. The method according to claim 1 or 2, wherein the NFC modules (NFC, NFC-SS, SE) comprise NFC-based services or functions of a security element (SE) for storage or for processing of security-critical data, the security element (SE) being connected via an NFC interface (NFC-SS).

4. The method according to at least one of the above claims, wherein in case of an unsuccessful or unterminated check the NFC modules (NFC, NFC-SS, SE) are in each case deactivated separately or that the switch-on process of the mobile station (10) is continued only with restricted functionality.

5. The method according to at least one of the above claims, wherein the authorization check is effected generally upon switch-on of the mobile station (10) or after configurable time intervals or only as needed upon activation of NFC modules (NFC, NFC-SS, SE).

6. The method according to at least one of the above claims, wherein in case of a plurality of NFC modules (NFC, NFC-SS, SE) on the mobile station (10) the authorization check is effected for said modules separately in each case, the identification (K) and the reference identification (RK) in each case comprising portions that relate to the individual modules and are handled separately.

7. The method according to at least one of the above claims, wherein a check module in the mobile station (10) monitors all interfaces of NFC modules (NFC-SS).

8. The method according to at least one of the above claims, wherein the authorization check is executed in the operating system of the mobile station (10) or in an authorization module associated therewith.

9. The method according to at least one of the above claims, wherein the mobile station (10) has provided thereon a locking mechanism which is so expanded that it activates the NFC modules (NFC, NFC-SS, SE) only in case of successful authorization.

10. The method according to claim 9, wherein the locking mechanism is configured as a SIM lock.

11. A mobile station (10) with NFC modules (NFC, NFC-SS, SE), comprising:
- a SIM/USIM card (SIM),
- at least one NFC module (NFC, NFC-SS, SE),
- a read module which is designed to read an identification (K) identifying a service provider from the SIM/USIM card (SIM),
- a reference module which is designed to detect a reference identification (RK) stored in the mobile station (10),
- a comparator which is intended for comparing the identification (K) identifying the service provider with the reference identification (RK) for a match, and
- an authorization module which supplies the NFC module (NFC, NFC-SS, SE) with power only if the comparator has ascertained a match,
- an external data carrier (12), wherein the SIM/USIM card (SIM) is equipped for data interchange with the external data carrier (12) with at least one additional contactless interface, so that the identification (K) identifying the service provider is transferred to the external data carrier (12) via said additional interface, and the reference identification (RK) via the NFC interface (NFC-SS), optionally via an antenna (14) integrated in the mobile station (10), for comparison for a match.

12. The mobile station according to claim 11, wherein the mobile station (10) has a base band controller (BBC) which controls at least the NFC modules (NFC, NFC-SS, SE).

13. A computer program product which is loadable directly into a memory of a mobile station (10) with NFC modules (NFC, NFC-SS, SE), with program code means, wherein all steps of a method according to at least one of claims 1 to 10 are executable when the program is executed in the mobile station (10).

## Revendications

1. Procédé de vérification d'une autorisation d'utilisation de modules NFC d'un terminal mobile (10) équipé d'une carte SIM / USIM (SIM) et d'au moins un module NFC (NFC, NFC-SS, SE), consistant en ce qu'un identificateur (K) identifiant un fournisseur de services est lu à partir d'une carte SIM / USIM (SIM) et est, pour examiner la concordance, comparé avec un identificateur de référence (RK) déposé dans le terminal mobile (10), les modules NFC (NFC, NFC-SS, SE) n'étant activés qu'exclusivement en cas de concordance, la vérification d'autorisation ayant lieu dans un support de données (12) externe, et la carte SIM / USIM (SIM) étant équipée d'au moins une interface supplémentaire sans contact pour l'échange de données avec l'appareil de lecture RFID ou autre appareil NFC (12), de telle sorte que, pour effectuer une comparaison afin d'examiner la concordance, l'identificateur (K) identifiant le fournisseur de services est transmis par l'intermédiaire de cette interface supplémentaire à l'appareil de lecture RFID ou autre appareil NFC (12), et l'identificateur de référence (RK) est transmis à ces derniers par l'intermédiaire de l'interface NFC (NFC-SS).

2. Procédé selon la revendication 1, l'identificateur de référence (RK) étant transmis à l'appareil de lecture RFID ou autre appareil NFC (12) par une antenne (14) intégrée dans l'appareil de téléphonie mobile (10).

3. Procédé selon une des revendications 1 ou 2, les modules NFC (NFC, NFC-SS, SE) comprenant des services relatifs à la NFC ou des fonctions d'un élément de sécurité (SE) pour le stockage ou le traitement de données critiques pour la sécurité, l'élément de sécurité (SE) étant relié par l'intermédiaire d'une interface NFC (NFC-SS).

4. Procédé selon au moins une des revendications précédentes, les modules NFC (NFC, NFC-SS, SE) étant désactivés respectivement séparément ou le processus d'enclenchement de l'appareil de téléphonie mobile (10) n'étant poursuivi qu'avec fonctionnalité limitée en cas de vérification sans succès ou non terminée.

5. Procédé selon au moins une des revendications précédentes, la vérification d'autorisation ayant lieu d'une manière générale lors de l'enclenchement de l'appareil de téléphonie mobile (10) ou après des intervalles de temps configurables ou bien uniquement en fonction des besoins lors de l'activation de modules NFC (NFC, NFC-SS, SE).

6. Procédé selon au moins une des revendications précédentes, la vérification d'autorisation ayant lieu, dans le cas de plusieurs modules NFC (NFC, NFC-SS, SE) sur l'appareil de téléphonie mobile (10), respectivement séparément pour ces modules, et l'identificateur (K) et l'identificateur de référence (RK) comprenant respectivement des parties qui se rapportent aux différents modules et sont traitées séparément.

7. Procédé selon au moins une des revendications précédentes, un module de contrôle surveillant dans l'appareil de téléphonie mobile (10) toutes les interfaces de modules NFC (NFC, NFC-SS).

8. Procédé selon au moins une des revendications précédentes, la vérification d'autorisation étant effectuée dans le système d'exploitation de l'appareil de téléphonie mobile (10) ou dans un module d'autorisation affecté à ce dernier.

9. Procédé selon au moins une des revendications précédentes, un mécanisme de verrouillage étant prévu sur l'appareil de téléphonie mobile (10) et étant élargi de telle façon que qu'il n'active les modules NFC (NFC, NFC-SS, SE) qu'en cas d'autorisation aboutie.

10. Procédé selon la revendication 9, le mécanisme de verrouillage étant réalisé sous forme d'un verrouillage SIM.

11. Appareil de téléphonie mobile (10) avec modules NFC (NFC, NFC-SS, SE), comprenant :
■ une carte SIM / USIM (SIM),
■ au moins un module NFC (NFC, NFC-SS, SE),
■ un module de lecture conçu pour lire à partir d'une carte SIM / USIM (SIM) un identificateur (K) identifiant un fournisseur de services,
■ un module de référence conçu pour reconnaître un identificateur de référence (RK) déposé dans l'appareil de téléphonie mobile (10),
■ un comparateur destiné à comparer l'identificateur (K) identifiant le fournisseur de services avec l'identificateur de référence (RK) pour en examiner la concordance et
■ un module d'autorisation qui n'alimente en courant le module NFC (NFC, NFC-SS, SE) que quand le comparateur a constaté une concordance,
■ un support de données externe (12), la carte SIM / USIM (SIM) étant équipée d'au moins une interface supplémentaire sans contact pour l'échange de données avec le support de données externe (12), de telle sorte que, pour effectuer une comparaison afin d'examiner la concordance, l'identificateur (K) identifiant le fournisseur de services est transmis par l'intermédiaire de cette interface supplémentaire au support de données externe (12), et l'identificateur de référence (RK) est transmis à ce dernier par l'intermédiaire de l'interface NFC (NFC-SS), le cas échéant par l'intermédiaire d'une antenne (14) intégrée dans l'appareil de téléphonie mobile (10).

12. Appareil de téléphonie mobile selon la revendication 11, l'appareil de téléphonie mobile (10) comportant un contrôleur bande de base (BBC) qui commande au moins les modules NFC (NFC-SS, SE).

13. Produit programme d'ordinateur directement chargeable dans la mémoire d'un appareil de téléphonie mobile (10) avec modules NFC (NFC, NFC-SS, SE) et pourvu de moyens de code de programme, toutes les étapes d'un processus étant réalisables selon au moins une des revendications de 1 à 10 quand le programme est exécuté dans l'appareil de téléphonie mobile (10).
